(19) Europäisches Patentamt
European Patent Office
Office européen des brevets

(11) **EP 2 093 869 A1**

(12) **EUROPÄISCHE PATENTANMELDUNG**

(43) Veröffentlichungstag:
26.08.2009 Patentblatt 2009/35

(51) Int Cl.:
*H02M 1/088* (2006.01)          *H02M 5/293* (2006.01)
*H02M 5/458* (2006.01)

(21) Anmeldenummer: **09450035.2**

(22) Anmeldetag: **18.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **20.02.2008   AT 2762008**

(71) Anmelder: **ITT Manufacturing Enterprises, Inc.**
**Wilmington, Delaware 19801 (US)**

(72) Erfinder: **Bruckmüller, Thomas**
**A-1210 Wien (AT)**

(74) Vertreter: **Margotti, Herwig Franz et al**
**Wipplingerstrasse 30**
**1010 Wien (AT)**

(54) **Frequenzumrichter und Verfahren zum Betreiben desselben**

(57)    Ein Frequenzumrichter (1) weist eine Brücke (2) mit einem ersten (Z1) und einem zweiten (Z2) parallel geschalteten Brückenzweig auf, an die eine, optional gleichgerichtete, Wechsel-Eingangsspannung (Ue) mit einer Eingangsfrequenz (fe) angelegt wird. In jedem Brückenzweig (Z1, Z2) sind ein erster (T1; T3) und ein zweiter (T2; T4) Schalter in Serie geschaltet, wobei Mittelanzapfungen (M1, M2) einen Ausgang bilden, an dem eine Ausgangsspannung (Ua) abgreifbar ist. Der erste Schalter (T1) des ersten Brückenzweiges und der zweite Schalter (T4) des zweiten Brückenzweiges bilden ein nicht-invertierendes Schalterpaar (T1, T4). Der zweite Schalter (T2) des ersten Brückenzweiges und der erste Schalter (T3) des zweiten Brückenzweiges bilden ein invertierendes Schalterpaar (T2, T3). Ein Phasendetektor (4) erfasst Viertelwellenperioden der Eingangsspannung (Ue). Schaltersteuermittel (5) steuern die Schalter in einer Schaltabfolge, bei der Viertelwellen der Eingangsspannung (Ue) oder deren gleichgerichteten Signals (Ug) so an den Ausgang geschaltet werden, dass sich eine gleichanteilsfreie Ausgangsspannung (Ua) einstellt.

Fig. 2A

EP 2 093 869 A1

Fig. 2B

**Beschreibung**

Die Erfindung betrifft ein Verfahren zum Betreiben eines Frequenzumrichters gemäß dem Oberbegriff des Anspruchs 1 sowie einen Frequenzumrichter gemäß dem Oberbegriff des Anspruchs 11.

Herkömmliche elektronische (statische) Frequenzumrichter bestehen aus einem Gleichrichter, der einen Gleichstrom- oder Gleichspannungs-Zwischenkreis speist, einem Stützkondensator im Gleichstrom- bzw. Gleichspannungs-Zwischenkreis zur Glättung der Energieaufnahme aus dem elektrischen Versorgungsnetz und einem aus diesem Zwischenkreis gespeisten Wechselrichter. Der Wechselrichter arbeitet mit Schalttransistoren und erzeugt eine pulsweitenmodulierte (PWM) Spannung, die in ihrem Mittelwert die Sinusspannung der gewünschten Frequenz und Amplitude ist. Die Induktivität des Motors besorgt die Glättung des Stromes. Die Höhe der resultierenden Ausgangsspannung und auch deren Frequenz können in weiten Grenzen geregelt werden.

In der Praxis hat sich gezeigt, dass der Sützkondensator - in den meisten Fällen handelt es sich hier um einen Hochspannungselektrolytkondensator - nicht nur einen Kostenfaktor darstellt, sondern auch eine der Hauptursachen für den Ausfall von elektronischen Frequenzumrichtern ist. Weiters bringen die hohen Schaltfrequenzen zur Erzeugung der pulsweitenmodulierten Spannung erhebliche Schaltverluste mit sich.

Es besteht somit das Bedürfnis nach einem Frequenzumrichter und einem Verfahren zum Betreiben eines Frequenzumrichters, die die Nachteile des Standes der Technik mildern oder sogar zur Gänze ausschalten können.

Diese Aufgabe wird erfindungsgemäß durch ein Verfahren zum Betreiben eines Frequenzumrichters mit den kennzeichnenden Merkmalen des Anspruchs 1 sowie durch einen Frequenzumrichter mit den kennzeichnenden Merkmalen des Anspruchs 11 gelöst. Vorteilhafte Ausgestaltungen der Erfindung sind in den Unteransprüchen dargelegt.

Die Erfindung umfasst einen Frequenzumrichter, der eine Brücke mit einem ersten und einem zweiten parallel geschalteten Brückenzweig aufweist, an die eine Wechsel-Eingangsspannung mit einer vorgegebenen Eingangsfrequenz oder deren gleichgerichtetes Signal angelegt wird. In jedem Brückenzweig sind ein erster und ein zweiter Schalter in Serie geschaltet, zwischen denen jeweils eine Mittelanzapfung vorgesehen ist. Die beiden Mittelanzapfungen bilden einen Ausgang, an dem eine Ausgangsspannung abgreifbar ist.

Der erste Schalter des ersten Brückenzweiges und der zweite Schalter des zweiten Brückenzweiges werden gemeinsam ein- oder ausgeschaltet und bilden ein nicht-invertierendes Schalterpaar, das im eingeschalteten Zustand die Eingangsspannung in unveränderter Polarität an den Ausgang anlegt. Der zweite Schalter des ersten Brückenzweiges und der erste Schalter des zweiten Brückenzweiges werden gemeinsam ein-oder ausgeschaltet und bilden ein invertierendes Schalterpaar, das im eingeschalteten Zustand die Eingangsspannung in invertierter Polarität an den Ausgang anlegt, wobei niemals beide diagonale Schalterpaare gleichzeitig eingeschaltet sind. Gemäß der Erfindung ist ein Phasendetektor vorgesehen, mit dem Viertelwellenperioden der Wechsel-Eingangsspannung erfasst werden sowie Schaltersteuermittel für die Schalter, mit denen eine Schaltabfolge des nicht-invertierenden und des invertierenden Schalterpaars festgelegt wird, bei der Viertelwellen der Eingangsspannung so an den Ausgang geschaltet werden, dass sich eine gleichanteilsfreie Ausgangsspannung einstellt.

Durch diese Maßnahmen ist es möglich unter Einsparung des bei Frequenzumrichtern nach dem Stand der Technik notwendigen Zwischenkreis-Kondensators Kosten einzusparen und die Zuverlässigkeit zu erhöhen. Da der erfindungsgemäße Frequenzumrichter mit sehr niedrigen, versorgungsspannungssynchronen Schaltfrequenzen arbeitet, werden die Schaltverluste minimiert und ein verbessertes EMV-Verhalten sowie eine stark reduzierte dU/dt Belastung des Motors erreicht. Die bei Frequenzumrichtern nach dem Stand der Technik auftretenden Netzrückwirkungen durch die periodische Aufladung des Kondensators im Bereich der Netzspannungsmaxima werden gemäß der Erfindung vollständig eliminiert.

Mithilfe des erfindungsgemäßen Frequenzumrichters sind zwar nicht beliebige Frequenzen wie bei einem herkömmlichen Frequenzumrichter mit PWM erreichbar, die einstellbaren unterschiedlichen Frequenzen sind allerdings für viele Anwendungen mehr als ausreichend.

Die Viertelwelle stellt den kleinsten Anteil eines Sinussignales dar, der phasenunabhängig immer den gleichen Effektivwert aufweist. Daher sind alle Kombinationen von Viertelwellen, die gleichanteilsfrei sind, zulässig. Vorzuziehen sind natürlich Ansteuerungsmuster, die im Frequenzspektrum einen möglichst hohen Anteil der gewünschten Frequenz zeigen und bei denen die Amplitude dieses Frequenzanteiles der gewünschten f/U Kennlinie entspricht, wie nachfolgend näher erläutert wird. Zur Einstellung der f/U Kennlinie ist prinzipiell ist auch eine zusätzliche Phasenanschnitt- oder Phasenabschnittsteuerung möglich, d.h. also nur teilweises Durchsteuern der Viertelwellen.

Bei einem Ansteuerungsmuster für die Schalter, das im Frequenzspektrum einen möglichst hohen Anteil der gewünschten Frequenz zeigt und bei dem die Amplitude dieses Frequenzanteiles der gewünschten f/U Kennlinie entspricht, kann die Schaltabfolge mindestens eine Pause von zumindest einer Viertelwellen-Periodendauer der Eingangsspannung aufweisen, in der beide Schalterpaare ausgeschaltet sind. Bei diesem Ansteuerungsmuster ist es zweckmäßig, wenn die Schaltabfolge eine geradzahlige Anzahl von Pausen aufweist, wobei in günstigen Ausführungsformen jeweils zwei gleich lange Pausen um die halbe Dauer der Schaltabfolge voneinander beabstandet sind.

Die theoretisch möglichen unendlich langen Periodendauern von Schaltabfolgen, die Pausen beinhalten, haben in der Praxis ihre Grenzen. Diese Grenzen der Anwendbarkeit sind einerseits dadurch bedingt, dass der Anteil an Pausen in jeder Schaltabfolge nicht zu hoch sein darf, da in diesen Pausen der angeschlossene Motor kein Drehmoment entwickeln kann und sich daher eine starke lastabhängige periodische Drehzahlschwankung ergeben würde. Die Schaltabfolgesequenz an sich soll auch nicht beliebig lang werden, da die Gleichanteilsfreiheit des Signals nur über die gesamte Sequenzdauer gegeben ist und daher innerhalb langer Sequenzen gleichanteilsbehaftete Teile auftreten können, die zu Sättigungserscheinungen führen können. Umgekehrt wird mit steigender Schaltfolgen-Sequenzlänge die Frequenzauflösung feiner. Aus diesen Erwägungen ist es bevorzugt, wenn die Sequenzlängen von Schaltabfolgen, die zumindest eine Pause innerhalb einer Periodendauer enthalten, 20 Viertelwellen nicht übersteigt (also z.B. 100 ms Sequenzdauer bei 50Hz). Dies bietet einen guten Kompromiss zwischen erzielbarer Frequenzauflösung (minimal ca. 1 Hz) und hinreichend kurzen Sequenzen um oben genannten Nachteilen entgegenzuwirken.

Prinzipiell ist es beim erfindungsgemäßen Freqenzumrichter nicht notwendig, einen Gleichrichter im Eingangskreis vorzusehen, wenn man bidirektionale Schalter verwendet, die z.B. durch Antiparallelschaltung von zwei Transistoren realisiert werden können. Dies ist vom Wirkungsgrad her sogar günstiger, da so nur ein Spannungsabfall an den Schaltern auftritt, nicht aber auch ein zusätzlicher Spannungsabfall an Dioden eines Gleichrichters. Aus kommerziellen Gründen kann jedoch bevorzugt werden, der Brücke des Frequenzumrichters einen Vollwellengleichrichter vorzuschalten, an dessen Eingang die Eingangsspannung angelegt wird, da bei dieser Ausführungsform unidirektionale Schalter verwendet werden können.

Wie erwähnt, weist der erfindungsgemäße Frequenzumrichter keine Stützkondensatoren im Zwischenkreis auf. Diese wären sogar unerwünscht, da zur Durchführung des erfindungsgemäßen Verfahrens ein nicht geglättetes Signal erforderlich ist. In vielen Anwendungsfällen kann sogar auf jede Art von Glättungskondensator im Vollwellengleichrichter verzichtet werden. Zur Unschädlichmachung von Schaltspitzen, etc. kann jedoch ein kleiner Kondensator im Frequenzumrichter vorgesehen werden, wobei nochmals betont wird, dass es sich dabei nicht im einen Stützkondensator handelt.

Ein bevorzugtes Ansteuerungsmuster für einen Ausgangsfrequenzbereich von 0 - 2/3 der Frequenz der Eingangsspannung weist eine Schaltabfolge auf, die zwei positive Viertelwellen der Eingangsspannung an den Ausgang schaltet, worauf eine Pause von k Viertelwellenperiodendauern der Eingangsspannung folgt, wobei k = 1, 2, ...,∞, worauf zwei negative Viertelwellen der Eingangsspannung an den Ausgang geschaltet werden, gefolgt von einer Pause von k Viertelwellenperiodendauern der Eingangsspannung, wobei k = 1, 2, ... , ∞. In der Praxis wird aus den eingangs erwähnten Gründen jedoch nur in Ausnahmefällen ein Indexwert k > 20 gewählt werden.

Für einen Ausgangsfrequenzbereich von 4/5 ≤ 1 der Frequenz der Eingangsspannung ist es günstig, wenn die Schaltabfolge eine geradzahlige Anzahl von Viertelwellen der Eingangsspannung an den Ausgang schaltet, gefolgt von einer Pause von einer Viertelwellenperiodendauer der Eingangsspannung.

Ein bevorzugtes Ansteuerungsmuster der Schalter für einen Ausgangsfrequenzbereich vom 1- bis 2-fachen der Frequenz der Eingangsspannung umfasst eine Schaltabfolge, die eine ungerade Anzahl aus nicht invertierten Viertelwellen der Eingangsspannung, direkt gefolgt von der gleichen Anzahl an invertierten Viertelwellen der Eingangsspannung an den Ausgang schaltet.

Die Erfindung wird nun anhand von nicht einschränkenden Ausführungsbeispielen unter Bezugnahme auf die Zeichnungen näher erläutert. In den Zeichnungen zeigen:

Fig. 1 ein Blockschaltbild des erfindungsgemäßen statischen Frequenzumrichters;
die Figuren 2A, 2B die Signalverläufe einer Eingangsspannung und einer durch eine erfindungsgemäße Schaltfolge der Schalter des Frequenzumrichters erzielten Ausgangsspannung;
die Figuren 3A, 3B die Signalverläufe einer gleichgerichteten Eingangsspannung und einer durch eine erfindungsgemäße Schaltabfolge der Schalter des Frequenzumrichters erzielten Ausgangsspannung;
die Figuren 4A, 4B bis 17A, 17B jeweils weitere Paare von Eingangsspannungen und durch erfindungsgemäße Schaltabfolgen der Schalter des Frequenzumrichters erzielten Ausgangsspannungen.

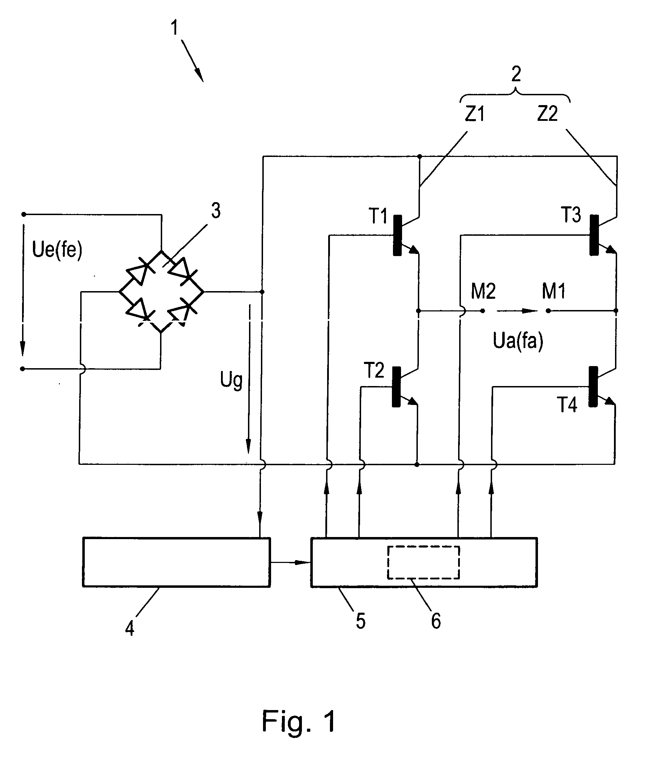

Zunächst wird anhand des Blockschaltbilds von Fig. 1 das Prinzip des erfindungsgemäßen Frequenzumrichters 1 erläutert. Der Frequenzumrichter 1 umfasst eine Brückenschaltung 2, die einen ersten Brückenzweig Z1 und einen zweiten Brückenzweig Z2 aufweist, die miteinander parallel geschaltet sind. Die Brücke 2 bildet einen Zwischenkreis. An die Brücke 2 ist eine Wechsel-Eingangsspannung Ue mit einer vorgegebenen Eingangsfrequenz fe anlegbar, wobei die Wechsel-Eingangsspannung Ue üblicherweise ein sinusförmiges Netzspannungssignal ist. Alternativ zur Wechsel-Eingangsspannung Ue kann ein durch einen Gleichrichter 3 gleichgerichtetes Signal Ug der Wechsel-Eingangsspannung Ue an die Brücke 2 angelegt werden. Der Gleichrichter 3 ist als Vollwellengleichrichter ausgebildet, wobei zu betonen ist, dass nur eine Gleichrichtung jeder zweiten Halbwelle der Wechsel-Eingangsspannung vorgenommen wird, aber keine Glättung des Signals stattfindet.

In jedem Brückenzweig Z1, Z2 ist ein erster Schalter T1 bzw. T3 mit einem zweiten Schalter T2 bzw. T4 in Serie geschaltet, zwischen denen eine Mittelanzapfung M1 bzw. M2 vorgesehen ist, wobei die beiden Mittelanzapfungen M1, M2 einen Signalausgang bilden, an dem eine Ausgangsspannung Ua abgreifbar ist. Es sind Schaltersteuermittel 5 vorgesehen, die den ersten Schalter T1 des ersten Brückenzweiges Z1 und den zweiten Schalter T4 des zweiten Brückenzweiges Z2 gemeinsam ein- oder ausschalten, wobei diese beiden Schalter ein nicht-invertierendes Schalterpaar T1, T4 bilden, das im eingeschalteten Zustand die Eingangsspannung Ue bzw. die gleichgerichtete Spannung Ug in unveränderter Polarität an den Ausgang anlegt. In ähnlicher Weise schalten die Schaltersteuermittel 5 den zweiten Schalter T2 des ersten Brückenzweiges Z1 und den ersten Schalter T3 des zweiten Brückenzweiges Z2 gemeinsam ein- oder aus, wobei die beiden Schalter T2, T3 ein invertierendes Schalterpaar bilden, das im eingeschalteten Zustand die Eingangsspannung Ue bzw. die gleichgerichtete Spannung Ug in invertierter Polarität an den Ausgang anlegt. Die Schaltersteuermittel 5 schalten niemals beide diagonale Schalterpaare T1, T4 bzw. T2, T3 gleichzeitig ein. Die Schaltersteuermittel 5 sind beispielsweise als Mikrocontroller, ASIC, sequentielle Logikschaltung o.ä. ausgebildet.

Der Frequenzumrichter 1 umfasst weiters einen Phasendetektor 4, der Viertelwellenperioden der Wechsel-Eingangsspannung Ue oder der gleichgerichteten Spannung Ug der Wechsel-Eingangsspannung Ue erfasst und diese Information an die Schaltersteuermittel 5 weiterleitet. Die Schaltersteuermittel 5 sind so ausgebildet, dass eine Schaltabfolge des nicht-invertierenden und des invertierenden Schalterpaars T1, T4 bzw. T2, T3 festgelegt ist, bei der Viertelwellen der Eingangsspannung Ue bzw. der gleichgerichteten Spannung Ug der Wechsel-Eingangsspannung Ue so an den Ausgang geschaltet werden, dass sich in Summe eine gleichanteilsfreie Ausgangsspannung Ua einstellt. Die Generierung der Ausgangsspannung Ua erfolgt somit im Gegensatz zur bekannten PWM derart, dass Viertelwellen der Eingangsspannung mit der entsprechenden Polarität an den Ausgang angelegt werden. Die Viertelwelle stellt den kleinsten Anteil eines Sinussignals dar, der phasenunabhängig immer den gleichen Effektivwert aufweist. Daher sind alle Kombinationen von Viertelwellen am Ausgang, die gleichanteilsfrei sind, zulässig. Mit dieser Ansteuerung ist es möglich unter Einsparung des sonst notwendigen Zwischenkreiskondensators und mit minimierten Schaltverlusten verschiedene Frequenzen (wenn auch nicht jede beliebige Frequenz) zur Ansteuerung von Asynchronmotoren zu generieren.

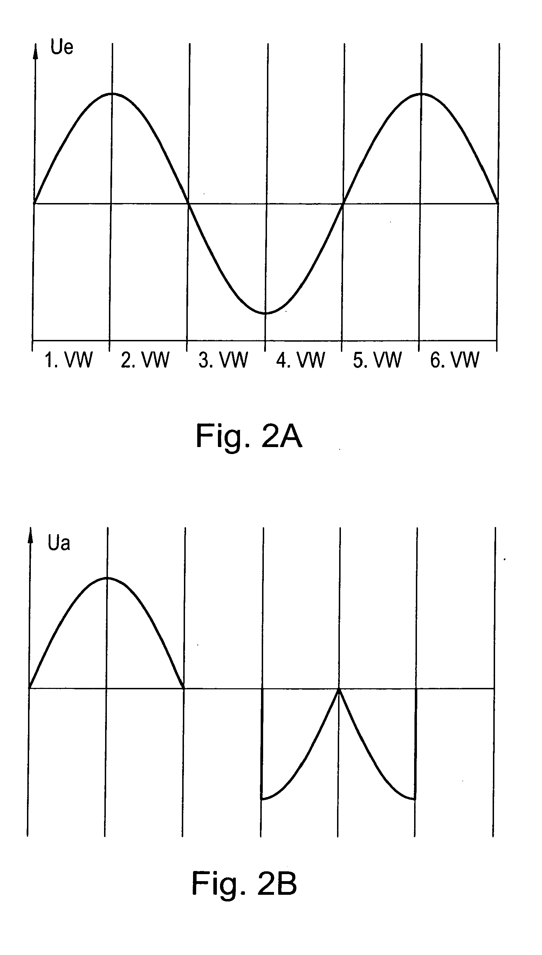

Ein erstes Beispiel, dargestellt in den Figuren 2A und 2B zeigt die Generierung einer Ausgangsspannung Ua mit einer Ausgangsfrequenz fa von 2/3 der Eingangsfrequenz fe der sinusförmigen Eingangsspannung Ue für den Fall, dass kein Gleichrichter 3 verwendet wird, d.h. dass das Eingangssignal Ue direkt an die Brücke 2 angelegt wird. Es sei darauf hingewiesen, dass bei Weglassen des Gleichrichters 3 im Eingangskreis die Schalter T1 bis T4 als bidirektionale Schalter auszuführen sind, was z.B. durch Antiparallelschaltung von zwei Transistoren realisiert werden kann.

Die Eingangsspannung Ue ist in Fig. 2A dargestellt, es handelt sich dabei z.B. um eine Netzspannung mit 50 Hz. In Fig. 2A sind 1,5 Perioden der Eingangsspannung Ue dargestellt, oder in anderen Worten sechs Viertelwellen VW. Die von den Schaltersteuermitteln 5 gesteuerte Schaltabfolge der Schalter T1 bis T4 wird so gewählt, dass die 1. und 2. Viertelwelle der Eingangsspannung Ue unverändert an den Ausgang geschaltet wird, die 3. Viertelwelle unterdrückt wird, die 4. Viertelwelle wieder unverändert an den Ausgang geschaltet wird, die 5. Viertelwelle jedoch invertiert an den Ausgang geschaltet wird und die 6. Viertelwelle wiederum unterdrückt wird. In Tabellenform lautet die Schaltabfolge der vier Schalter T1 bis T4 folgendermaßen:

| Viertelwelle | T1, T4 (nicht invertierend) | T2, T3 (invertierend) |
|---|---|---|
| 1 | 1 0 | 0 |
| 2 | 1 | 0 |
| 3 | 0 | 0 |
| 4 | 1 | 0 |
| 5 | 0 | 1 |
| 6 | 0 | 0 |
| 7 | 0 | 1 |
| 8 | 0 | 1 |
| 9 | 0 | 0 |
| 10 | 0 | 1 |
| 11 | 1 | 0 |
| 12 | 0 | 0 |

wobei die Abfolge von 7 bis 12 gleich der von 1 bis 6 mit vertauschten Schalterpaaren ist, da bei Viertelwelle 7 bis 12 die Phase zwischen Ein- und Ausgang um 180° gegenüber dem Signal von Abfolge 1 bis 6 verschoben ist.

Diese Schaltabfolge wird periodisch wiederholt. Diese Ansteuerung der Schalter T1 bis T4 erlaubt somit die Generierung von 2/3 der Netzfrequenz, also z.B. 33Hz bei 50Hz Netzfrequenz.

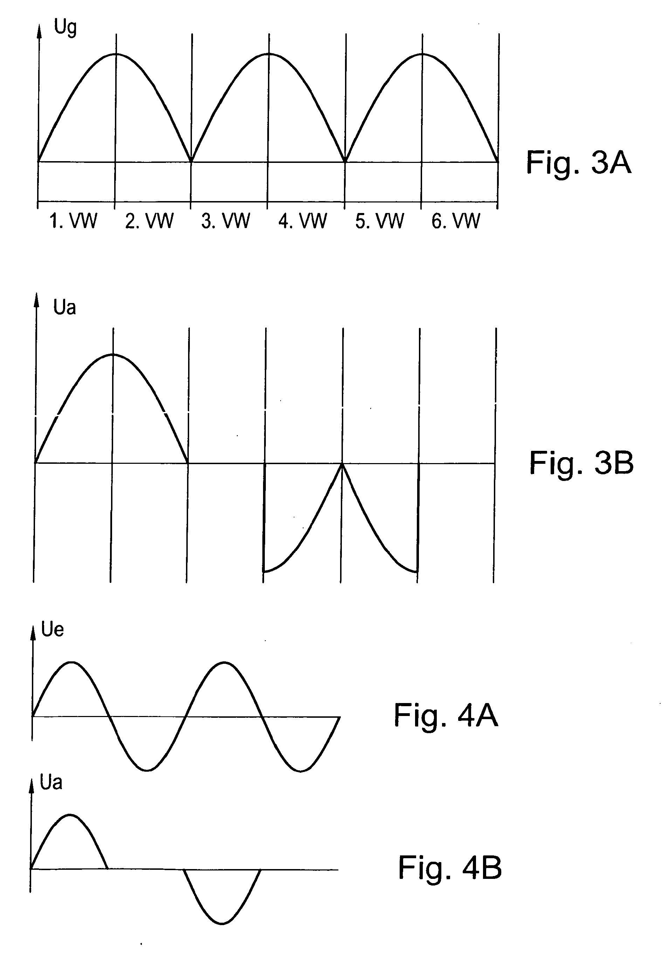

In den Figuren 3A und 3B ist die Umwandlung einer Wechsel-Eingangsspannung Ue in eine Ausgangsspannung Ua mit einer Ausgangsfrequenz fa von 2/3 der Eingangsfrequenz fe für den Fall dargestellt, dass der Gleichrichter 3 wie in Fig. 1 dargestellt als Vollweggleichrichter ausgeführt ist. Man erhält dadurch am Eingang der Brücke 2 das in Fig. 2A gezeigte gleichgerichtete Signal Ug.

Die von den Schaltersteuermitteln 5 gesteuerte Schaltabfolge der Schalter T1 bis T4 wird so gewählt, dass die 1. und 2. Viertelwelle der Eingangsspannung Ue unverändert an den Ausgang geschaltet wird, die 3. Viertelwelle unterdrückt wird, die 4. und die 5. Viertelwelle invertiert an den Ausgang geschaltet werden und die 6. Viertelwelle wiederum unterdrückt wird. In Tabellenform lautet die Schaltabfolge der vier Schalter T1 bis T4 folgendermaßen:

| Viertelwelle | T1, T4 (nicht invertierend) | T2, T3 (invertierend) |
|---|---|---|
| 1 | 1 | 0 |
| 2 | 1 | 0 |
| 3 | 0 | 0 |
| 4 | 0 | 1 |
| 5 | 0 | 1 |
| 6 | 0 | 0 |

wobei 1 = Schalter ein und 0 = Schalter aus.

Wie erwähnt, ist als Ausgangssignal Ua prinzipiell jede gleichanteilsfreie Kombination aus Viertelwellen des Eingangssignals Ue und Pausen geeignet. Vorzuziehen sind natürlich Schaltabfolgen, die im Frequenzspektrum einen möglichst hohen Anteil der gewünschten Frequenz zeigen und bei denen die Amplitude dieses Frequenzanteiles der gewünschten f/U Kennlinie entspricht. Zur Einstellung der f/U Kennlinie ist prinzipiell ist auch eine zusätzliche Phasenanschnittsteuerung oder Phasenabschnittsteuerung möglich, d.h. also nur teilweise Durchsteuerung der Viertelwellen, wie weiter unten gezeigt wird.

Zusammenfassend sind bei einer Eingangsfrequenz fe der Wechsel-Eingangsspannung Ue von 50Hz folgende Ausgangsfrequenzen fa möglich:

| Im Bereich ... | Ausgangsfreiuenzen fa in Hz | | | | | | | | | |
|---|---|---|---|---|---|---|---|---|---|---|
| 0...2/3 fe: | ... | 9,09 | 10,0 | 11,11 | 12,5 | 14,29 | 16,67 | 20 | 25 | 33,33 |
| 4/5 fe...fe: | 40 | 42,86 | 44,44 | 45,45 | 46,15 | 46,67 | 47,06 | 47,37 | 47,62 | ... |
| fe...2*fe: | 50 | 75 | 83,33 | 87,5 | 90 | 91,67 | 92,86 | 93,75 | ... | 100 |
| und auch: | 50 | 50,1 | ... | 52 | 52,38 | 52,94 | 53,84 | 55,55 | 60 | 100 |

In den folgenden Gleichungen stellt n eine Laufvariable dar, durch deren Variation verschiedene Kombinationen von Viertelwellen und Pausen erreicht werden, die als Ausgangsspannung Ua geeignet sind. Wie ersichtlich gibt es unendlich viele erzielbare Ausgangsfrequenzen fa. Es ergibt sich dennoch keine beliebig feine Frequenzauflösung. Des Weiteren sind nicht alle Kurvenformen hinsichtlich Ihres Oberwellenanteiles praktisch anwendbar.

Für den Ausgangsfrequenzbereich 0 ... 2/3 der Eingangsfrequenz fe sind folgende Ausgangsfrequenzen fa möglich:

$$f_a = \frac{2}{n} * f_e \mid n = 3,4,5,...,\infty$$

also für eine Eingangsfrequenz fe von z.B. 50 Hz: 33Hz, 25Hz, 20Hz, 16.6Hz, ... Hier werden also jeweils Pakete aus 2 Viertelwellen mit verschiedenen Pausendauern kombiniert. Der Effektivwert des Ausgangssignals Ua ergibt sich zu

$$U_a = \frac{2}{n} * U_e \mid n = 3,4,5,\ldots,\infty$$

Es zeigen sich die gleichen Faktoren wie für die Frequenzen. Somit ergibt sich eine lineare f/U Kennlinie.

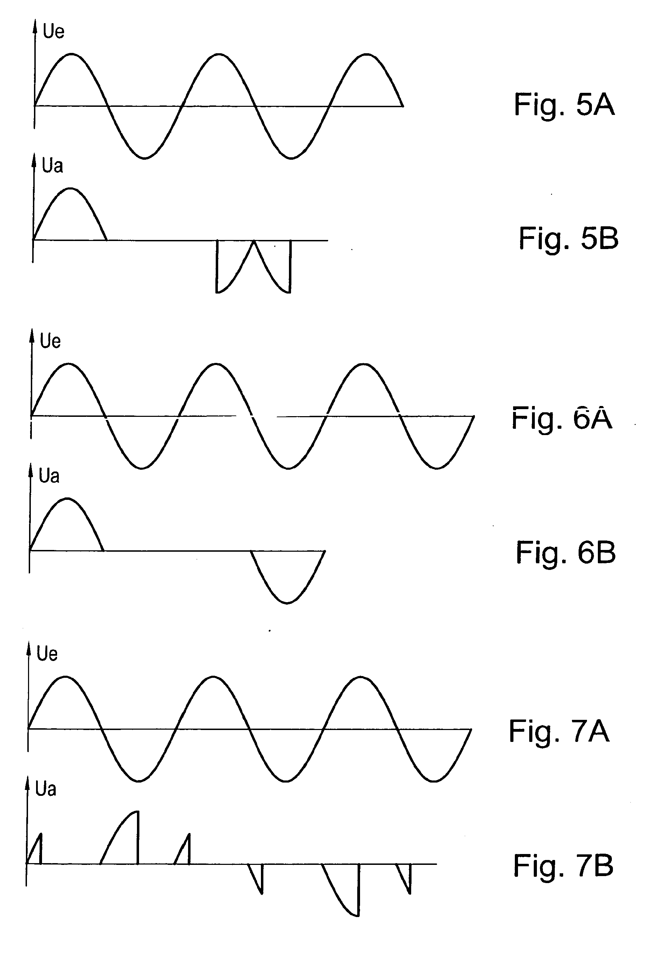

Die Grafiken in den Figuren 4A, 4B bis 6A, 6B zeigen einige weitere mögliche Spannungsverläufe, die den obigen Formeln genügen. Die jeweils obere Signalkurve (Fig. 4A, 5A, 6A) stellt die Eingangsspannung Ue dar, die jeweils untere Signalkurve (Fig. 4B, 5B, 6B) eine Periode der generierten Ausgangsspannung Ua.

Die Ausgangsspannung Ua von Fig. 4B stellt sich ein für n = 4. Es ergibt sich:

Ausgangsfreqenz fa = 1/2 * Eingangsfrequenz fe

Ausgangsspannung Ua = 1/2 * Eingangsspannung Ue     [Effektivwert]

Die von den Schaltersteuermitteln 5 gesteuerte Schaltabfolge der Schalter T1 bis T4 lautet: unter Berücksichtigung der vom Gleichrichter 3 bewirkten Signalgleichrichtung lauten:

| Viertelwelle | T1, T4 (nicht invertierend) | T2, T3 (invertierend) |
|---|---|---|
| 1 | 1 | 0 |
| 2 | 1 | 0 |
| 3 | 0 | 0 |
| 4 | 0 | 0 |
| 5 | 0 | 1 |
| 6 | 0 | 1 |
| 7 | 0 | 0 |
| 8 | 0 | 0 |

Die Ausgangsspannung Ua von Fig. 5B stellt sich ein für n = 5. Es ergibt sich:

Ausgangsfreqenz fa = 2/5 * Eingangsfrequenz fe

Ausgangsspannung Ua = 2/5 * Eingangsspannung Ue     [Effektivwert]

Die von den Schaltersteuermitteln 5 gesteuerte Schaltabfolge der Schalter T1 bis T4 lautet unter Berücksichtigung der vom Gleichrichter 3 bewirkten Signalgleichrichtung:

| Viertelwelle | T1, T4 (nicht invertierend) | T2, T3 (invertierend) |
|---|---|---|
| 1 | 1 | 0 |
| 2 | 1 | 0 |
| 3 | 0 | 0 |
| 4 | 0 | 0 |
| 5 | 0 | 0 |
| 6 | 0 | 1 |
| 7 | 0 | 1 |

(fortgesetzt)

| Viertelwelle | T1, T4 (nicht invertierend) | T2, T3 (invertierend) |
|---|---|---|
| 8 | 0 | 0 |
| 9 | 0 | 0 |
| 10 | 0 | 0 |

Die Ausgangsspannung Ua von Fig. 6B stellt sich ein für n = 6. Es ergibt sich:

$$\text{Ausgangsfreqenz fa} = 1/3 * \text{Eingangsfrequenz fe}$$

$$\text{Ausgangsspannung Ua} = 1/3 * \text{Eingangsspannung Ue} \qquad [\text{Effektivwert}]$$

Die von den Schaltersteuermitteln 5 gesteuerte Schaltabfolge der Schalter T1 bis T4 lautet unter Berücksichtigung der vom Gleichrichter 3 bewirkten Signalgleichrichtung:

| Viertelwelle | T1, T4 (nicht invertierend) | T2, T3 (invertierend) |
|---|---|---|
| 1 | 1 | 0 |
| 2 | 1 | 0 |
| 3 | 0 | 0 |
| 4 | 0 | 0 |
| 5 | 0 | 0 |
| 6 | 0 | 0 |
| 7 | 0 | 1 |
| 8 | 0 | 1 |
| 9 | 0 | 0 |
| 10 | 0 | 0 |
| 11 | 0 | 0 |
| 12 | 0 | 0 |

Die zusätzliche Verwendung einer Phasenanschnittsteuerung 6, die z.B. in die Schaltersteuermittel 5 integriert sein kann, wird anhand der Signalverläufe der Figuren 7A und 7B demonstriert, wobei in Fig. 7A die Eingangsspannung Ue und in Fig. 7B die Ausgangsspannung Ua dargestellt ist, deren Frequenz 1/3 der Frequenz der Eingangsspannung Ue beträgt. Mithilfe der Phasenanschnittsteuerung 6 kann die Kurvenform der Ausgangsspannung Ua näher an den Sollwert gebracht werden, was sowohl eine bessere Einstellbarkeit der f/U Kennlinie als auch eine Verkleinerung des Oberwellenanteiles ermöglicht.

Die von den Schaltersteuermitteln 5 gesteuerte Schaltabfolge der Schalter T1 bis T4 lautet unter Berücksichtigung der vom Gleichrichter 3 bewirkten Signalgleichrichtung:

| Viertelwelle | T1, T4 (nicht invertierend) | T2, T3 (invertierend) |
|---|---|---|
| 1 | 1a | 0 |
| 2 | 0 | 0 |
| 3 | 1 | 0 |
| 4 | 0 | 0 |
| 5 | 1a | 0 |

(fortgesetzt)

| Viertelwelle | T1, T4 (nicht invertierend) | T2, T3 (invertierend) |
|---|---|---|
| 6 | 0 | 0 |
| 7 | 0 | 1a |
| 8 | 0 | 0 |
| 9 | 0 | 1 |
| 10 | 0 | 0 |
| 11 | 0 | 1a |
| 12 | 0 | 0 |

wobei in obiger Tabelle die Bezeichnung '1a' bedeutet, dass die jeweiligen Schalter zu Beginn der Viertelwelle eingeschaltet werden, unter der Steuerung der Phasenanschnittsteuerung 6 jedoch vor Vollendung der Viertelwelle abgeschaltet werden.

Für einen Frequenzbereich fa der Ausgangsspannung Ua von 4/5 * fe ≤ fa < fe, wobei fe die Frequenz der Eingangsspannung Ue ist, lassen sich mögliche erzielbare Freqenzen durch die folgende Formel angeben:

$$f_a = \frac{n-1}{n} * f_e \mid n = 5,7,9,...,\infty$$

also für eine Eingangsfrequenz fe von z.B. 50 Hz: 40Hz, 42.9Hz, 44.4Hz, 45.Hz, ...

Auch hier ergibt sich eine lineare f/U Kennlinie

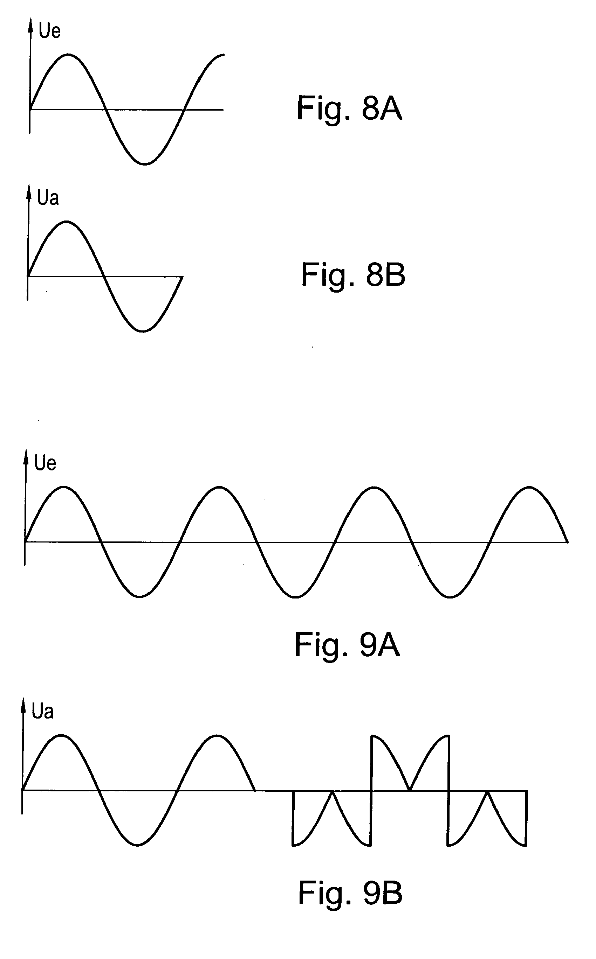

In diesem Fall umfasst die Schaltabfolge eine geradzahlige Anzahl von Viertelwellen der Eingangsspannung Ue, die an den Ausgang geschaltet werden, gefolgt von einer Pause von einer Viertelwellenperiodendauer der Eingangsspannung Ue. Beispiele dafür sind in den Figuren 8A, 8B, 9A, 9B, 10A, 10B angegeben, wobei die Figuren 8A, 9A, 10A jeweils den Signalverlauf der Eingangsspannung Ue zeigen, und die Figuren 8B, 9B, 10B jeweils den Signalverlauf der Ausgangsspannung Ua zeigen.

Die Ausgangsspannung Ua von Fig. 8B stellt sich ein für n = 5. Es ergibt sich:

Ausgangsfreqenz fa = 4/5 * Eingangsfrequenz fe

Ausgangsspannung Ua = 4/5 * Eingangsspannung Ue     [Effektivwert]

Die dafür erforderliche Schaltabfolge der Schalter T1 bis T4 ist unter analoger Anwendung der obigen Beispiele für den Fachmann aus den Signalverlaufsdiagrammen ableitbar.

Die Ausgangsspannung Ua von Fig. 9B stellt sich ein für n = 7. Es ergibt sich:

Ausgangsfreqenz fa = 6/7 * Eingangsfrequenz fe

Ausgangsspannung Ua = 6/7 * Eingangsspannung Ue     [Effektivwert]

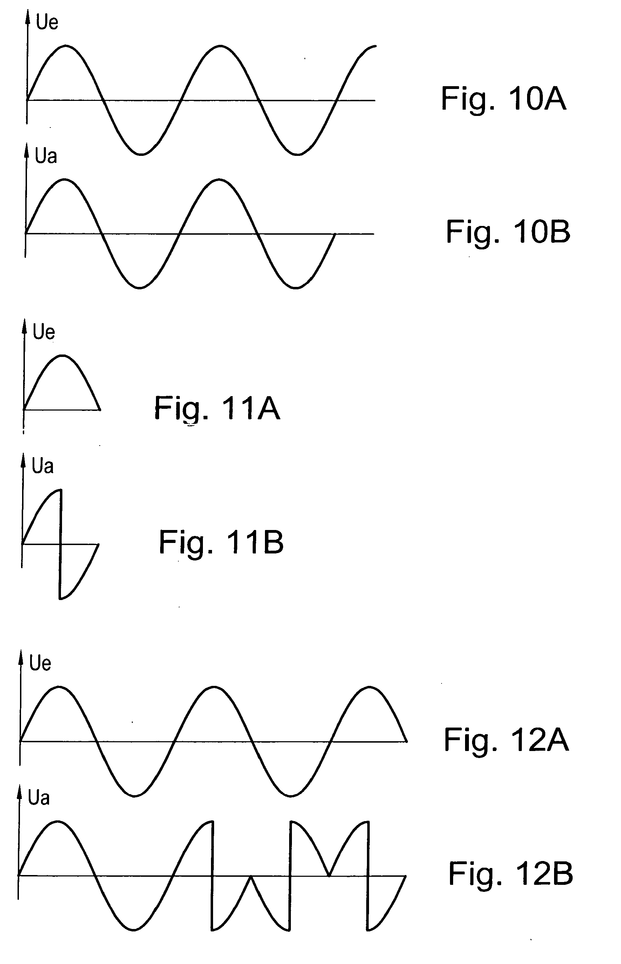

Die Ausgangsspannung Ua von Fig. 10B stellt sich ein für n = 9. Es ergibt sich:

Ausgangsfreqenz fa = 8/9 * Eingangsfrequenz fe

Ausgangsspannung Ua = 8/9 * Eingangsspannung Ue     [Effektivwert]

Und schließlich sind für einen Ausgangsfrequenzbereich fa vom 1- bis 2-fachen der Eingangsfrequenz alle Kombinationen aus einer Viertelwelle und einer geraden Anzahl von 2er Paketen von Viertelwellen möglich, also:

$$f_a = \frac{n+1}{2n+1} * 2 * f_e \mid n = 0,2,4,...,\infty$$

(bei einer Eingangsfrequenz von z.B. 50 Hz sind das 100Hz, 60Hz, 55.5 Hz, ...).

Hier ist der Effektivwert der Ausgangsspannung Ua unabhängig von der Frequenz fa immer gleich dem der Eingangsspannung Ue. Beispiele dafür sind in den Figuren 11A, 11B, 12A, 12B, 13A, 13B angegeben, wobei die Figuren 11A, 12A, 13A jeweils den Signalverlauf der Eingangsspannung Ue zeigen, und die Figuren 11B, 12B, 13B jeweils den Signalverlauf der Ausgangsspannung Ua zeigen.

Die Ausgangsspannung Ua von Fig. 11 B stellt sich ein für n = 0. Es ergibt sich:

Ausgangsfreqenz fa = 2 * Eingangsfrequenz fe

Ausgangsspannung Ua = Eingangsspannung Ue     [Effektivwert]

Die Ausgangsspannung Ua von Fig. 12B stellt sich ein für n = 2. Es ergibt sich:

Ausgangsfreqenz fa = 6/5 * Eingangsfrequenz fe

Ausgangsspannung Ua = Eingangsspannung Ue     [Effektivwert]

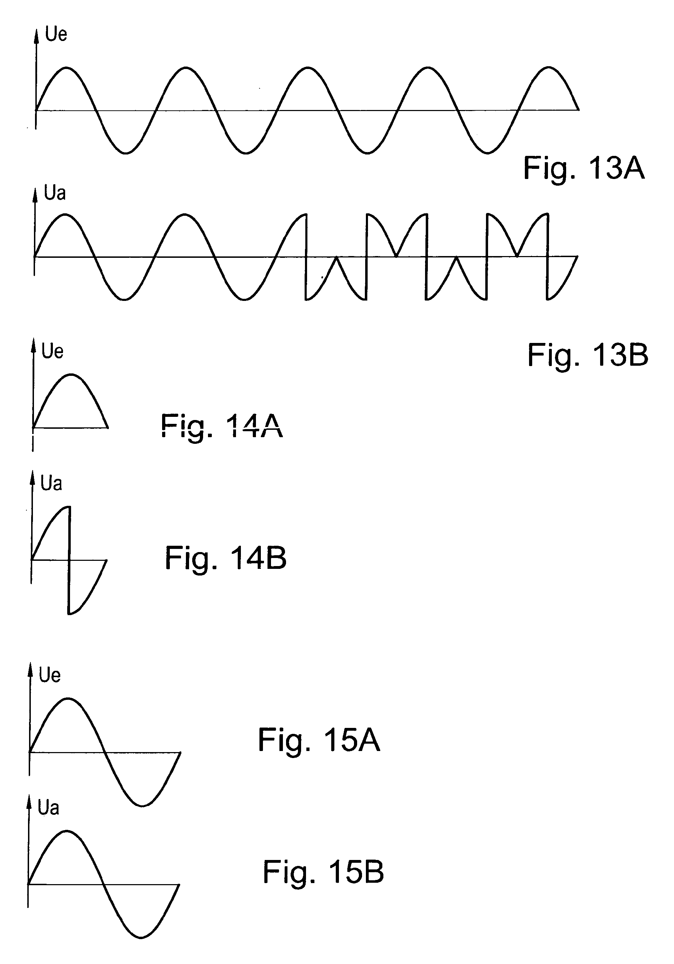

Die Ausgangsspannung Ua von Fig. 13B stellt sich ein für n = 4. Es ergibt sich:

Ausgangsfreqenz fa = 10/9 * Eingangsfrequenz fe

Ausgangsspannung Ua = Eingangsspannung Ue     [Effektivwert]

Weiters möglich im Ausgangsfrequenzbereich fa vom 1- bis 2-fachen der Eingangsfrequenz sind alle Kombinationen aus einem 2er Paket von Viertelwellen und einer geraden Anzahl von Viertelwellen, also

$$f_a \frac{n+1}{2+n} * 2 * f_e \mid n = 0,2,4,...,\infty$$

(bei einer Eingangsfrequenz von z.B. 50 Hz sind das 50Hz, 75Hz, 83,3 Hz, ...)

Auch hier ist der Effektivwert der Ausgangsspannung unabhängig von der Frequenz immer gleich dem der Eingangsspannung. Beispiele dafür sind in den Figuren 14A, 14B, 15A, 15B, 16A, 16B, 17A, 17B angegeben, wobei die Figuren 14A, 15A, 16A, 17A jeweils den Signalverlauf der Eingangsspannung Ue zeigen, und die Figuren 14B, 15B, 16B, 17B jeweils den Signalverlauf der Ausgangsspannung Ua zeigen.

Die Ausgangsspannung Ua von Fig. 14B stellt sich ein für n = ∞. Es ergibt sich:

$$\text{Ausgangsfreqenz fa} = 2 * \text{Eingangsfrequenz fe}$$
$$\text{Ausgangsspannung Ua} = \text{Eingangsspannung Ue} \quad [\text{Effektivwert}]$$

Die Ausgangsspannung Ua von Fig. 15B stellt sich ein für n = 0. Es ergibt sich:

$$\text{Ausgangsfreqenz fa} = \text{Eingangsfrequenz fe}$$
$$\text{Ausgangsspannung Ua} = \text{Eingangsspannung Ue} \quad [\text{Effektivwert}]$$

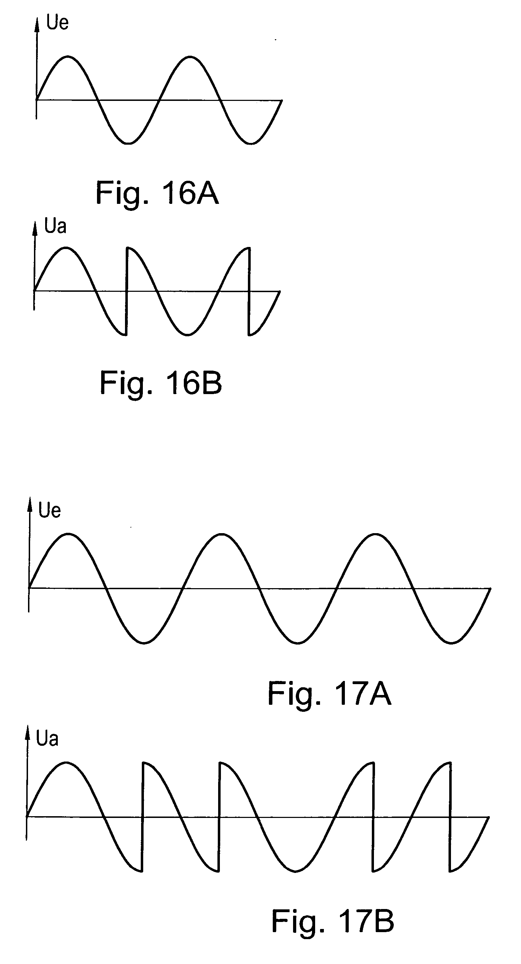

Die Ausgangsspannung Ua von Fig. 16B stellt sich ein für n = 2. Es ergibt sich:

$$\text{Ausgangsfreqenz fa} = 3/2 * \text{Eingangsfrequenz fe}$$
$$\text{Ausgangsspannung Ua} = \text{Eingangsspannung Ue} \quad [\text{Effektivwert}]$$

Die Ausgangsspannung Ua von Fig. 17B stellt sich ein für n = 4. Es ergibt sich:

$$\text{Ausgangsfreqenz fa} = 5/3 * \text{Eingangsfrequenz fe}$$
$$\text{Ausgangsspannung Ua} = \text{Eingangsspannung Ue} \quad [\text{Effektivwert}]$$

**Patentansprüche**

1. Verfahren zum Betreiben eines Frequenzumrichters (1), der eine Brücke (2) mit einem ersten (Z1) und einem zweiten (Z2) parallel geschalteten Brückenzweig aufweist, an die eine Wechsel-Eingangsspannung (Ue) mit einer vorgegebenen Eingangsfrequenz (fe) oder deren gleichgerichtetes Signal (Ug) angelegt wird, wobei in jedem Brückenzweig (Z1, Z2) ein erster (T1; T3) und ein zweiter (T2; T4) Schalter in Serie geschaltet sind, zwischen denen eine Mittelanzapfung (M1, M2) vorgesehen ist, wobei die beiden Mittelanzapfungen einen Ausgang bilden, an dem eine Ausgangsspannung (Ua) abgreifbar ist, wobei der erste Schalter (T1) des ersten Brückenzweiges und der zweite Schalter (T4) des zweiten Brückenzweiges gemeinsam ein- oder ausgeschaltet werden und ein nicht-invertierendes Schalterpaar (T1, T4) bilden, das im eingeschalteten Zustand die Eingangsspannung in unveränderter Polarität an den Ausgang anlegt, wobei der zweite Schalter (T2) des ersten Brückenzweiges und der erste Schalter (T3) des zweiten Brückenzweiges gemeinsam ein-oder ausgeschaltet werden und ein invertierendes Schalterpaar (T2, T3) bilden, das im eingeschalteten Zustand die Eingangsspannung in invertierter Polarität an den Ausgang anlegt, wobei niemals beide diagonale Schalterpaare gleichzeitig eingeschaltet sind, **dadurch gekennzeichnet, dass** Viertelwellenperioden der Wechsel-Eingangsspannung (Ue) erfasst werden und dass eine Schaltabfolge des nicht-invertierenden und des invertierenden Schalterpaars festgelegt wird, bei der Viertelwellen der Eingangsspannung (Ue) oder deren gleichgerichteten Signals (Ug) so an den Ausgang geschaltet werden, dass sich eine gleichanteilsfreie Ausgangsspannung (Ua) einstellt.

2. Verfahren nach Anspruch 1, **dadurch gekennzeichnet, dass** die Schaltabfolge mindestens eine Pause von zumindest einer Viertelwellen-Periodendauer der Eingangsspannung aufweist, in der beide Schalterpaare ausgeschaltet sind, wobei vorzugsweise die zumindest eine Pause innerhalb einer Periodendauer von maximal zwanzig Viertelwellen auftritt.

3. Verfahren nach Anspruch 2, **dadurch gekennzeichnet, dass** die Schaltabfolge eine geradzahlige Anzahl von Pausen aufweist.

4. Verfahren nach Anspruch 3, **dadurch gekennzeichnet, dass** jeweils zwei gleich lange Pausen um die halbe Dauer der Schaltabfolge voneinander beabstandet sind.

5. Verfahren nach einem der vorhergehenden Ansprüche, **dadurch gekennzeichnet, dass** der Brücke ein Vollwellengleichrichter (3) vorgeschaltet ist, an dessen Eingang die Eingangsspannung angelegt wird.

6. Verfahren nach Anspruch 5, **dadurch gekennzeichnet, dass** der Vollwellengleichrichter glättungskondensatorlos ausgebildet ist.

7. Verfahren nach Anspruch 4, **dadurch gekennzeichnet, dass** die Schaltabfolge zwei positive Viertelwellen der Eingangsspannung an den Ausgang schaltet, worauf eine Pause von k Viertelwellenperiodendauern der Eingangsspannung folgt, wobei k = 1, 2, ..., ∞, worauf zwei negative Viertelwellen der Eingangsspannung an den Ausgang geschaltet werden, gefolgt von einer Pause von k Viertelwellenperiodendauern der Eingangsspannung, wobei k = 1, 2, ..., ∞.

8. Verfahren nach Anspruch 2, **dadurch gekennzeichnet, dass** die Schaltabfolge eine geradzahlige Anzahl von Viertelwellen der Eingangsspannung an den Ausgang schaltet, gefolgt von einer Pause von einer Viertelwellenperiodendauer der Eingangsspannung.

9. Verfahren nach Anspruch 1, **dadurch gekennzeichnet, dass** die Schaltabfolge eine ungerade Anzahl aus nicht invertierten Viertelwellen der Eingangsspannung, direkt gefolgt von der gleichen Anzahl an invertierten Viertelwellen der Eingangsspannung an den Ausgang schaltet.

10. Verfahren nach einem der Ansprüche 1 bis 6, **dadurch gekennzeichnet, dass** die zum Ausgang durchgeschalteten Viertelwellen der Eingangsspannung phasenangeschnitten oder phasenabgeschnitten werden.

11. Frequenzumrichter (1), eine Brücke (2) mit einem ersten (Z1) und einem zweiten (Z2) parallel geschalteten Brückenzweig aufweisend, an die eine Wechsel-Eingangsspannung (Ue) mit einer vorgegebenen Eingangsfrequenz (fe) oder deren gleichgerichtetes Signal angelegt wird, wobei in jedem Brückenzweig (Z1, Z2) ein erster (T1; T3) und ein zweiter (T2; T4) Schalter in Serie geschaltet sind, zwischen denen eine Mittelanzapfung (M1, M2) vorgesehen ist, wobei die beiden Mittelanzapfungen einen Ausgang bilden, an dem eine Ausgangsspannung (Ua) abgreifbar ist, wobei der erste Schalter (T1) des ersten Brückenzweiges und der zweite Schalter (T4) des zweiten Brückenzweiges gemeinsam ein- oder ausgeschaltet werden und ein nicht-invertierendes Schalterpaar (T1, T4) bilden, das im eingeschalteten Zustand die Eingangsspannung in unveränderter Polarität an den Ausgang anlegt, wobei der zweite Schalter (T2) des ersten Brückenzweiges und der erste Schalter (T3) des zweiten Brückenzweiges gemeinsam ein-oder ausgeschaltet werden und ein invertierendes Schalterpaar (T2, T3) bilden, das im eingeschalteten Zustand die Eingangsspannung in invertierter Polarität an den Ausgang anlegt, wobei niemals beide diagonale Schalterpaare gleichzeitig eingeschaltet sind, **gekennzeichnet durch** einen Phasendetektor (4) zur Erfassung von Viertelwellenperioden der Wechsel-Eingangsspannung (Ue) und Schaltersteuermittel (5) zur Ansteuerung der Schalter (T1 - T4), wobei der Phasendetektor (4) den Schaltersteuermitteln (5) die Information über die erfassten Viertelwellenperioden zuführt und in den Schaltersteuermitteln (5) eine Schaltabfolge des nicht-invertierenden und des invertierenden Schalterpaars (T1, T4; T2, T3) festgelegt ist, bei der Viertelwellen der Eingangsspannung (Ue) oder deren gleichgerichteten Signals (Ug) so an den Ausgang geschaltet werden, dass sich eine gleichanteilsfreie Ausgangsspannung (Ua) einstellt.

12. Frequenzumrichter nach Anspruch 11, **dadurch gekennzeichnet, dass** die Schaltabfolge mindestens eine Pause von zumindest einer Viertelwellen-Periodendauer der Eingangsspannung aufweist, in der beide Schalterpaare ausgeschaltet sind, wobei vorzugsweise die zumindest eine Pause innerhalb einer Periodendauer von maximal zwanzig Viertelwellen auftritt.

13. Frequenzumrichter nach Anspruch 12, **dadurch gekennzeichnet, dass** die Schaltabfolge eine geradzahlige Anzahl von Pausen aufweist.

14. Frequenzumrichter nach Anspruch 13, **dadurch gekennzeichnet, dass** jeweils zwei gleich lange Pausen um die halbe Dauer der Schaltabfolge voneinander beabstandet sind.

15. Frequenzumrichter nach einem der Ansprüche 11 bis 14, **dadurch gekennzeichnet, dass** der Brücke (2) ein Vollwellengleichrichter (3) vorgeschaltet ist, an dessen Eingang die Eingangsspannung (Ue) angelegt wird.

**16.** Frequenzumrichter nach Anspruch 15, **dadurch gekennzeichnet, dass** der Vollwellengleichrichter (3) glättungskondensatorlos ausgebildet ist.

**17.** Frequenzumrichter nach Anspruch 14, **dadurch gekennzeichnet, dass** die Schaltabfolge zwei positive Viertelwellen der Eingangsspannung an den Ausgang schaltet, worauf eine Pause von k Viertelwellenperiodendauern der Eingangsspannung folgt, wobei k = 1, 2, ..., ∞, worauf zwei negative Viertelwellen der Eingangsspannung an den Ausgang geschaltet werden, gefolgt von einer Pause von k Viertelwellenperiodendauern der Eingangsspannung, wobei k = 1, 2, ..., ∞.

**18.** Frequenzumrichter nach Anspruch 12, **dadurch gekennzeichnet, dass** die Schaltabfolge eine geradzahlige Anzahl von Viertelwellen der Eingangsspannung an den Ausgang schaltet, gefolgt von einer Pause von einer Viertelwellenperiodendauer der Eingangsspannung.

**19.** Frequenzumrichter nach Anspruch 11, **dadurch gekennzeichnet, dass** die Schaltabfolge eine ungerade Anzahl aus nicht invertierten Viertelwellen der Eingangsspannung, direkt gefolgt von der gleichen Anzahl an invertierten Viertelwellen der Eingangsspannung an den Ausgang schaltet.

**20.** Frequenzumrichter nach einem der Ansprüche 11 bis 16, **gekennzeichnet durch** eine Phasenanschnitt- oder Phasenabschnittsteuerung (6), die die zum Ausgang durchgeschalteten Viertelwellen der Eingangsspannung (Ue) oder deren gleichgerichtetes Signal in der Phase an- oder abschneidet.

Fig. 1

Ue

1. VW  2. VW  3. VW  4. VW  5. VW  6. VW

## Fig. 2A

Ua

## Fig. 2B

Ug

1. VW  2. VW  3. VW  4. VW  5. VW  6. VW

Fig. 3A

Ua

Fig. 3B

Ue

Fig. 4A

Ua

Fig. 4B

Fig. 5A

Fig. 5B

Fig. 6A

Fig. 6B

Fig. 7A

Fig. 7B

Ue

Fig. 8A

Ua

Fig. 8B

Ue

Fig. 9A

Ua

Fig. 9B

Fig. 10A

Fig. 10B

Fig. 11A

Fig. 11B

Fig. 12A

Fig. 12B

Fig. 13A

Fig. 13B

Fig. 14A

Fig. 14B

Fig. 15A

Fig. 15B

Fig. 16A

Fig. 16B

Fig. 17A

Fig. 17B

Europäisches
Patentamt
European
Patent Office
Office européen
des brevets

**EUROPÄISCHER RECHERCHENBERICHT**

**Nummer der Anmeldung**

EP 09 45 0035

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 100 44 574 A1 (LEBER DIETER [DE]) 15. März 2001 (2001-03-15) * Spalte 2, Zeile 64 - Spalte 3, Zeile 35; Abbildungen 1-5 * * Spalte 4, Zeilen 38-54 * | 1,6,10, 11,16,20 | INV. H02M1/088 H02M5/293 H02M5/458 |
| A | * Spalte 4, Zeilen 26-37; Abbildung 1 * | 2-5,7-9, 12-15, 17-19 | |
| Y | EP 1 241 775 A (SEMIKRON ELEKTRONIK GMBH [DE]) 18. September 2002 (2002-09-18) * Absätze [0007], [0029]; Abbildungen 4-6 * | 1,6,10, 11,16,20 | |
| Y | DE 10 2004 046283 A1 (LEBER DIETER [DE]) 6. April 2006 (2006-04-06) * Abbildungen 2,4 * | 1,6,10, 11,16,20 | |
| Y | WO 2005/031963 A (MOALEM TSVIKA [IL]; SHLYAKHETSKY VICTOR [IL]; MOSTOVOY ALEXANDER [IL]) 7. April 2005 (2005-04-07) * Abbildungen 1-8 * | 1,6,10, 11,16,20 | **RECHERCHIERTE SACHGEBIETE (IPC)** H02M |

Der vorliegende Recherchenbericht wurde für alle Patentansprüche erstellt

| Recherchenort | Abschlußdatum der Recherche | Prüfer |
|---|---|---|
| München | 7. Mai 2009 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 09 45 0035

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2009

| Im Recherchenbericht angeführtes Patentdokument | Datum der Veröffentlichung | Mitglied(er) der Patentfamilie | Datum der Veröffentlichung |
|---|---|---|---|
| DE 10044574 A1 | 15-03-2001 | KEINE | |
| EP 1241775 A | 18-09-2002 | DE 10111913 A1<br>JP 2002272111 A<br>US 2002131286 A1 | 02-10-2002<br>20-09-2002<br>19-09-2002 |
| DE 102004046283 A1 | 06-04-2006 | KEINE | |
| WO 2005031963 A | 07-04-2005 | KEINE | |

EPO FORM P0461

Für nähere Einzelheiten zu diesem Anhang : siehe Amtsblatt des Europäischen Patentamts, Nr.12/82